Europäisches Patentamt

European Patent Office

Office européen des brevets

(11) Veröffentlichungsnummer: **0 312 622**
**A1**

## (12) EUROPÄISCHE PATENTANMELDUNG

(21) Anmeldenummer: **87115270.8**

(22) Anmeldetag: **19.10.87**

(51) Int. Cl.⁴: **F16B 11/00**

(43) Veröffentlichungstag der Anmeldung:
**26.04.89 Patentblatt 89/17**

(84) Benannte Vertragsstaaten:
**AT BE CH DE ES FR GB IT LI LU NL SE**

(71) Anmelder: **Sika AG, vorm. Kaspar Winkler & Co.**
**Tüffenwies 16-22**
**CH-8048 Zürich(CH)**

(72) Erfinder: **Werner, Danda**
**Landstrasser Hauptstrasse 4/3/13**
**A-1030 Wien(AT)**

(74) Vertreter: **Blum, Rudolf Emil Ernst et al**
**c/o E. Blum & Co Patentanwälte Vorderberg 11**
**CH-8044 Zürich(CH)**

(54) **Verfahren zur Herstellung einer unlösbaren, elastischen Verbindung.**

(57) Verfahren zur Herstellung einer unlösbaren, elastischen Verbindung, wobei wenigstens einer der zu verbindenden Teile Ausnehmungen (3) aufweist, zwischen die zu verbindenden Teile ein elastomerer Klebstoff aufgetragen wird und der elastomere Klebstoff beim Zusammenfügen der Teile die Ausnehmungen (3) durchsetzt und/oder ausfüllt, wodurch der elastomere Klebstoff nach seinem Aushärten ein die zu verbindenden Teile tragendes Profil (4) bildet.

FiG.1

## Verfahren zur Herstellung einer unlösbaren, elastischen Verbindung

Die Erfindung betrifft ein Verfahren zur Herstellung einer unlösbaren, elastischen Verbindung.

Vor allem im Fahrzeugbau, bei der Montage von beispielsweise Zierleisten an PKW, LKW, Bussen usw., als auch bei der Montage von Türdichtungen, insbesondere bei Kühlcontainern, sind unlösbare, elastische Verbindungen erforderlich, auf Grund unterschiedlicher thermischer Ausdehnungen der zu verbindenden Teile. Herkömmlicherweise werden derartige Verbindungen mechanisch, d.h. durch Nieten, Schweißen oder Verwenden von Clipsen, hergestellt, wobei jedoch bei Verwendung beispielsweise der Karosserie als einen der zu verbindenden Teile korrosionsfördernde Schäden verursacht werden. Zur Behebung dieser Nachteile ist es bekannt, die zu verbindenden Teile zu verkleben, wobei es aber unmöglich ist, Teile miteinander elastisch zu verbinden, welche keine ausreichende Klebe- oder Haftverbindung miteinander eingehen.

Aufgabe der Erfindung ist es daher, die oben genannten Nachteile zu beseitigen.

Die Erfindung löst die Aufgabe dadurch, daß wenigstens einer der zu verbindenden Teile Ausnehmungen aufweist, daß zwischen die zu verbindenden Teile ein elastomerer Klebstoff aufgetragen wird, und daß der elastomere Klebstoff beim Zusammenfügen der Teile die Ausnehmungen durchsetzt und/oder ausfüllt, wodurch der elastomere Klebstoff nach seinem Aushärten ein die zu verbindenden Teile tragendes Profil bildet.

Die Vorteile dieses Verfahrens liegen vor allem in der zur Klebeverbindung zusätzlichen Sicherheit durch die mechanische Verbindung, im Ausgleich zu geringer Klebstoffstärken, im Wegfallen hoher Werkzeugkosten für speziell geformte Fertigprofile oder Clipse für gleichwertige Verbindungen, da sich der verwendete elastomere Klebstoff im weichen Zustand allen Formen anpasst, und vor allem auch in der Arbeitszeitersparnis gegenüber traditionellen mechanischen Verbindungsmethoden, wie beispielsweise Nieten, Schweißen usw..

Das Verfahren wird daher vor allem dort Anwendung finden, wo elastische Verbindungen von Teilen mit unterschiedlichen thermischen Ausdehnungen, Korrosionsschutzüberlegungen, die Erhaltung der Werkstoffstrukturen usw. gefordert werden. Die Erfindung wird im folgenden an Hand von Ausführungsbeispielen unter Zuhilfenahme der angeschlossenen Zeichnung näher beschrieben.

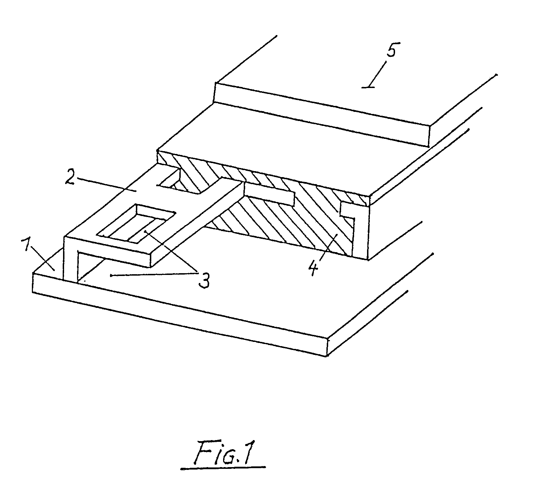

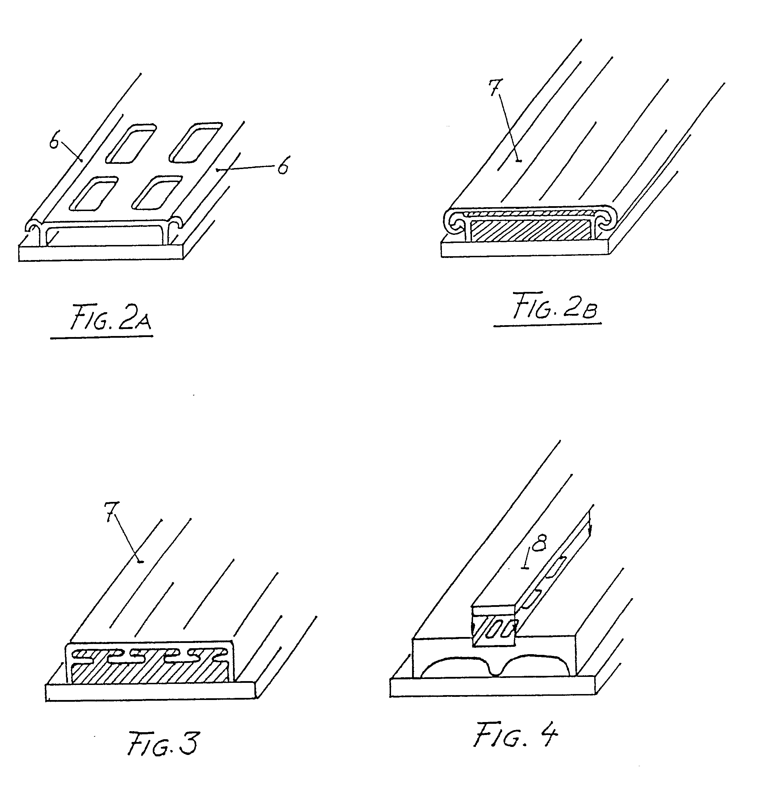

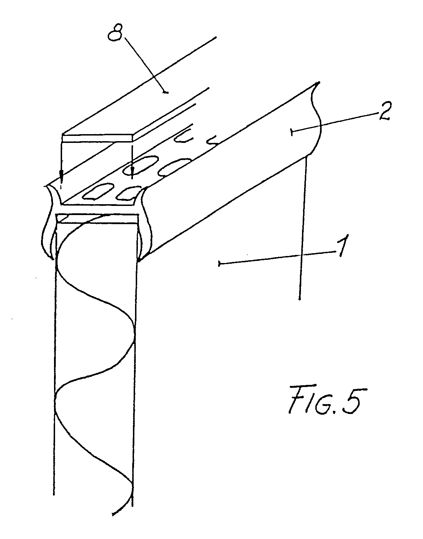

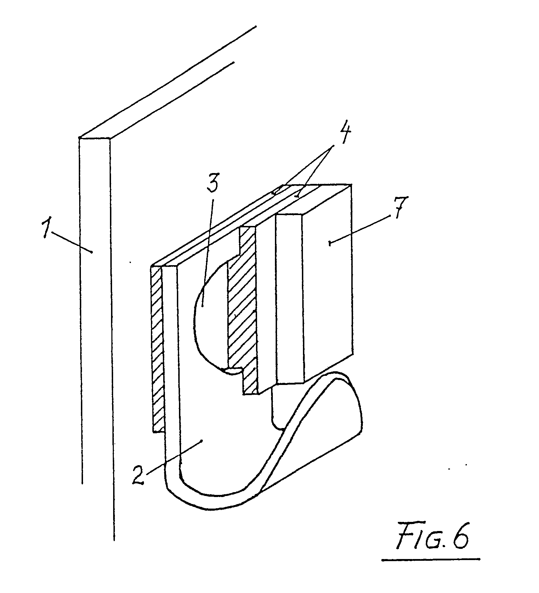

Es zeigen Fig. 1 in Verfahrensschritte gegliedert eine nach dem erfindungsgemäßen Verfahren hergestellte Verbindung; Fig.2a, 2b, 3 und 4 Anwendungen des erfindungsgemäßen Verfahrens im Kraftfahrzeugbau; Fig.5 eine weitere Anwendung des erfindungsgemäßen Verfahrens; und Fig.6 eine Darstellung des erfindungsgemäßen Verfahrens entsprechend der Darstellung in Fig. 1,

Die zu verbindenden Teile bestehen meist aus einem Trägerteil (1) und einem Anbauteil (2). Von den zu verbindenden Teilen ist wenigstens einer so perforiert, gelocht, gestanzt oder mit einer oder mehreren Ausnehmungen (3) versehen, daß ein elastomerer Klebstoff (4) die Ausnehmungen ausfüllen bzw. die Perforation durchdringen kann. Der Klebstoff (4) wird auf den Trägerteil aufgetragen und verstrichen, sodann wird der Anbauteil angedrückt. Der Kleber härtet auf Grund der Ausbildung der zu verbindenden Teile zu einem für diese Teile "maßgeschneiderten" Profil aus.

Abschließend kann ein weiterer, zu verbindender Teil (5) auf dem die Perforationen durchdringenden elastomeren Klebstoff angeordnet werden (Fig.1).

Der durch die Ausnehmungen durchgehende und verstrichene Klebstoff umschließt im ausgehärteten Zustand als Profil den Teil derart, daß er selbst getragen wird.

Fig.2 zeigt die Verwendung des Verfahrens im Kraftfahrzeugbau zur Befestigung von Zierleisten, wobei der Trägerteil (1) durch die Karosserie repräsentiert wird. Der Anbauteil weist an seinen Längsrändern nach unten gekrümmte Laschen (6) auf, in welche die Zierleiste (7) geschoben werden kann.

Fig.3 zeigt einen speziell ausgebildeten Hohlraum des Anbauteiles (2), wobei sich nach dem Auftragen des elastischen Klebstoffes beim Andrücken des Anbauteiles (2) an die Karosserie der Klebstoff derart verteilt, daß ein Verkrallungseffekt entsteht. Der Anbauteil entspricht der Zierleiste.

Fig.4 zeigt eine Ausbildung der zu verbindenden Teile, die im wesentlichen der Ausbildung nach Fig.1 entspricht, wobei der Längsmittelabschnitt des als Zierleiste fungierenden Anbauteiles eine Ausnehmung zur Aufnahme einer Deckleiste aufweist.

Fig.5 zeigt die Anwendung des Verfahrens bei der Montage einer Türdichtung eines Kühlcontainers.

Eine entsprechend perforierte Gummidichtung bildet den Anbauteil und wird mittels des elastomeren Klebstoffes (3) an der den Trägerteil bildenden isolierten Tür angeordnet. Der Klebstoff durchdringt die Perforationen und wird verstrichen. Als abschließender Teil wird eine Deckleiste (8) angeordnet. Durch die Verwendung des Verfahrens entfällt das bislang verwendete Vernieten (bis zu 200 Nieten pro Türblatt) der Gummidichtung sowie das dafür notwendige Einarbeiten von Gegenstücken in die Tür, um ein Greifen der Nieten zu ermöglichen.

Fig.6 zeigt die Montage eines Kleinteiles, hier eines Kleiderhakens an einem Untergrund, hier einer Wand. Die Wand bildet den Trägerteil (1), der Haken den Anbauteil (2). Der Anbauteil ist mit einer Bohrung (3) versehen. Der elastomere Klebstoff (4) wird aufgetragen und durchdringt nach dem Andrücken des Hakens die Bohrung (3), worauf er verstrichen und als Abschlußteil wiederum eine Deckleiste (7) angeordnet wird. Nach seinem Aushärten bildet der Klebstoff wiederum ein tragendes Profil.

In der Praxis wird meist eine Kombination von reinem Kleben an der Trägerseite und Kleben als auch Verkrallen an der Anbauseite zum Einsatz kommen, wobei auch jeweils beides möglich ist.

## Ansprüche

Verfahren zur Herstellung einer unlösbaren, elastischen Verbindung mittels elastomerem Klebstoff, wobei wenigstens einer der zu verbindenden Teile (1, 2) Ausnehmungen (3) aufweist, welche beim Verbinden vom Klebstoff ausgefüllt werden, dadurch gekennzeichnet, daß der elastomere Klebstoff auf einen zu verbindenden Teil (1) aufgetragen wird, daß der andere zu verbindende Teil (2) gegen den einen Teil (1) gedrückt wird, dass der elastomere Klebstoff unter Ausfüllen oder Durchsetzen der Ausnehmungen (3) die Ränder der Ausnehmungen (3) hintergreift, wobei der durchgehende Ausnehmungen durchsetzende elastomere Klebstoff gegebenenfalls verstrichen und/oder mit einer Abdeckleiste verklebt wird, und daß der Klebstoff aushärten gelassen wird, wobei der Klebstoff ein die zu verbindenden Teile tragendes Profil bildet.

*Fig.1*

FIG. 2A

FIG. 2B

FIG. 3

FIG. 4

*Fig.5*

_Fig. 6_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 368 345 (LES USINES DE MELLE) <br> * Figur 2 * <br> --- | 1 | F 16 B  11/00 |
| A | CH-A- 485 954 (FIRMA ADOLF HELD) <br> * Figur 12 * <br> --- | 1 | |
| A | FR-A-2 400 096 (FREYSSINET INTERNATIONAL (STUP)) <br> * Figuren 1-3 * <br> --- | 1 | |
| A | FR-A-2 457 758 (UNITED KINGDOM OF GREAT BRITAIN AND NORTHERN IRELAND) <br> * Figur 1 * <br> --- | 1 | |
| A | FR-A-2 552 684 (SCHATT GLASWERKE) <br> * Figur 3a * <br> --- | 1 | |
| A | GB-A- 589 260 (PRESSED STED) <br> * Figuren 2, 5 * <br> ----- | 1 | |

**RECHERCHIERTE SACHGEBIETE (Int. Cl.4)**

F 16 B  11/00
F 16 B   5/00
F 16 B   7/00
F 16 B   4/00

Der vorliegende Recherchenbericht wurde für alle Patentansprüche erstellt

| Recherchenort | Abschlußdatum der Recherche | Prüfer |
|---|---|---|
| BERLIN | 15-04-1988 | ZAPP E |